# EUROPÄISCHE PATENTSCHRIFT

(11) **EP 1 960 219 B1**
(45) Veröffentlichungstag und Bekanntmachung des Hinweises auf die Patenterteilung: **08.04.2009**
(21) Anmeldenummer: 06818944.8
(22) Anmeldetag: 01.12.2006
(51) Int. Cl.: B60G 11/28, B60G 15/14, F16F 9/05

(54) **LUFTFEDERBEIN**
PNEUMATIC SPRING STRUT
JAMBE D AMORTISSEUR PNEUMATIQUE

(30) Priorität: 16.12.2005 DE 102005060332
(43) Veröffentlichungstag der Anmeldung: 27.08.2008
(73) Patentinhaber: ZF Friedrichshafen AG, 88046 Friedrichshafen (DE)
(72) Erfinder: GEYER, Ulrich, 97456 Dittelbrunn/Hambach (DE); STÖCKER, Achim, 97456 Dittelbrunn/Hambach (DE)
(86) Internationale Anmeldenummer: PCT/EP2006/011544
(87) Internationale Veröffentlichungsnummer: WO 2007/073819

(56) Entgegenhaltungen:
- WO-A-20/06005299
- WO-A-20/06040011
- DE-A1- 19 755 549
- DE-C2- 19 704 433
- US-A- 4 588 171
- US-B1- 6 443 436

## Beschreibung

### Technisches Gebiet

Die Erfindung betrifft ein Luftfederbein gemäß dem Oberbegriff von Patentanspruch 1.

### Stand der Technik

Aus der DE 199 59 839 A1 ist ein Luftfederbein mit einer kardanischen Lagerung einer Luftfeder zu einem koaxialen Schwingungsdämpfer bekannt. In allen Varianten kommt ein Gelenkelement zur Anwendung, das an einem außenseitigen Zylinder des Schwingungsdämpfers angeschweißt ist. Insbesondere bei einem Schwingungsdämpfer in Einrohrbauart kann sich durch das angeschweißte Gelenkelement eine Formänderung einstellen, die die Lauffläche an der Innenseite des Zylinders für einen Kolben beeinträchtigt. In diesem Zusammenhang wäre noch die DE 100 50 067 A1 zu nennen.

Die gattungsbildende DE 197 04 433 C2 zeigt ein Luftfederbein, dessen Kolbenstange und Zylinder jeweils ein Kugelgelenk für die Luftfeder tragen. Bei dieser Lösung tritt jedoch das Problem auf, dass sich eine elastische Lagerung der Kolbenstange sehr aufwändig gestaltet.

Aufgabe der vorliegenden Erfindung ist es, ein Luftfederbein mit einer kardanischen Lagerung zu schaffen, bei der auf eine Verschweißung eines Gelenkelements mit dem Zylinder des Luftfederbeins verzichtet werden kann.

### Darstellung der Erfindung

Erfindungsgemäß wird die Aufgabe dadurch gelöst, dass die Kolbenstangenführung eine Befestigungsbuchse trägt, an der das Lagerelement fixiert ist.

Die Kolbenstangenführung als ein sehr stabiles Bauteil kann erhebliche Kräfte aufnehmen. Des Weiteren müssen am Zylinder keine Schweißarbeiten vorgenommen werden, die den Zylinder schädigen könnten.

Bei einer Ausführungsform ist die Befestigungsbuchse zwischen einer Stirnfläche der Kolbenstangenführung und einem zumindest partiell umgeformten Rand des Zylinders fixiert ist. An der Kolbenstangenführung selbst müssen keine Anpassungen vorgenommen werden, so dass weiterhin Standardbauteile verwendbar sind.

Die Befestigungsbuchse weist einen Befestigungskragen und eine Befestigungshülse auf, wobei der Befestigungskragen stimseitig auf der Kolbenstangenführung anliegt.

Bei einer Alternatiwariante sind die Kolbenstangenführung und die Befestigungshülse einteilig ausgeführt. Diese Lösung ist besonders montagefreundlich.

Gemäß einem vorteilhaften Unteranspruch weist die kardanische Lagerung ein sphäroidisches Lagerelement auf, der sich stirnseitig auf dem Zylinder abstützt. Für die Luftfeder steht damit eine sehr stabile axiale Unterstützungsfläche zur Verfügung.

In weiterer vorteilhafter Ausgestaltung weist das sphäroidische Lagerelement eine stufenförmige Durchgangsöffnung für den Schwingungsdämpfer auf, der axial an einem Absatz der Durchgangsöffnung zur Anlage kommt.

Zur axialen Sicherung weist die Befestigungshülse ein Befestigungsgewinde für eine Befestigungsmutter auf, die die kardanische Lagerung fixiert.

Alternativ kann die Befestigungshülse mit einem Sicherungsring zur Fixierung der kardanischen Lagerung zusammenwirken.

Zur Vermeidung von Klappergeräuschen zwischen der Lagerung und dem Schwingungsdämpfer wird der Sicherungsring axial von einem Federelement vorgespannt.

Das Federelement lässt beispielsweise dadurch realisieren, indem zwischen dem Absatz der Durchgangsöffnung und der Stirnfläche am Schwingüngsdämpfer eine Federscheibe angeordnet ist.

### Kurze Beschreibung der Zeichnungen

Anhand der folgenden Figurenbeschreibung soll die Erfindung näher erläutert werden.

Es zeigt:
- Fig. 1: Luftfederbein in Gesamtdarstellung
- Fig. 2: Detaildarstellung der Lagerung
- Fig. 3: Alternativvariante zur Fig. 2

### Wege zur Ausführung der Erfindung

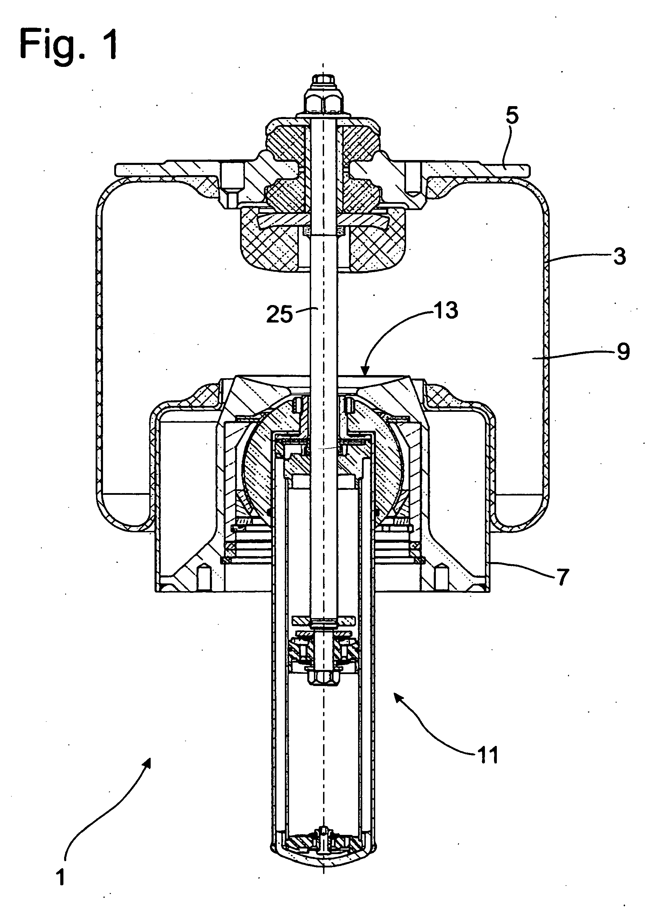

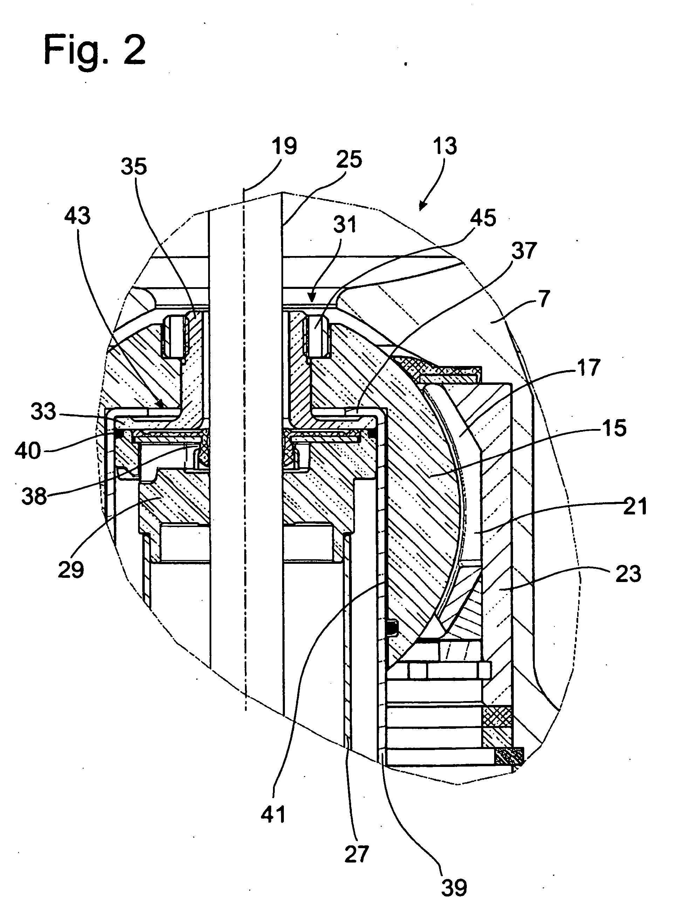

Die Figur 1 zeigt eine Luftfeder 1 mit einem Rollbalg 3, dessen oberes Ende sich an einer Anschlussplatte 5 abstützt. Das andere Ende des Rollbalgs ist an einem Abrollrohr 7 befestigt. Der Rollbalg und das Abrollrohr begrenzen einen Federraum 9, der mit einer nicht dargestellten Druckluftversorgung verbunden ist. Zwischen dem Abrollrohr 7 und einem am sich bekannten Schwingungsdämpfer 11 ist ein kardanisches Gelenk in der Bauform eines Kugelgelenks 13 angeordnet, das als Baugruppe in der Fig. 2 dargestellt ist.

In der Fig. 2 ist erkennbar, dass das Kugelgelenk 13 ein sphäroidisches Lagerelement 15 aufweist, das in einer Lagerschale 17 in Umfangsrichtung Drehbewegungen und bezogen auf eine Längsachse 19 auch Schwenkbewegungen ermöglicht. Des Weiteren ist die Lagerschale insbesondere radial elastisch, um bei der Montage über das sphäroidische Lagerelement 15 gedrückt werden zu können. Die Lagerschale verfügt über Schlitze 21, die sich vom oberen Ende bis über einen Äquator des sphäroidischen Lagerelements 15 erstrecken. Alternativ kann man auch einen einzelnen durchgehenden Schlitz vorsehen. Eine Übertragungshülse 23 nimmt das Kugelgelenk 13 auf und wird selbst innerhalb des Abrollrohrs 7 fixiert.

Der Schwingungsdämpfer 11 umfasst eine Kolbenstange 25, die in einem Zylinder 27 des Schwingungsdämpfers axial beweglich angeordnet und radial von einer Kolbenstangenführung 29 positioniert wird. Die Kolbenstangenführung 29 trägt eine Befestigungsbuchse 31 für das das sphäroidische Lagerelement 15. Die Befestigungsbuchse 31 weist einen Befestigungskragen 33 und eine Befestigungshülse 35 auf, wobei der Befestigungskragen stimseitig auf der Kolbenstangenführung 29 anliegt und von einem zumindest partiell umgeformten Rand 37 eines äußeren Zylinders 39 fixiert wird. Zwischen dem Befestigungskragen 33 und der Kolbenstangenführung sind eine Kolbenstangendichtung 38 und eine äußere Ringdichtung 40 verspannt. Das sphäroidische Lagerelement 15 stützt sich wiederum stirnseitig auf dem umgeformten Zylinder 39 ab. Dafür verfügt das sphäroidische Lagerelement über eine stufenförmige Durchgangsöffnung 41 so dass der Schwingungsdämpfer 11 axial an einem Absatz 43 der Durchgangsöffnung 41 zur Anlage kommt.

In dieser Ausführungsform weist die Befestigungshülse 35 ein Befestigungsgewinde für eine Befestigungsmutter 45 auf, die das Kugelgelenk am Schwingungsdämpfer 11 fixiert.

Bei der Montage des Schwingungsdämpfers 11 wird nach der Kolbenstangendichtung 38 und der Ringdichtung 40 die Befestigungshülse in den noch offenen äußeren Zylinder 39 eingeführt. Danach wird der überstehende Rand 37 des äußeren Zylinders 39 in Richtung des Befestigungskragens 33 umgebogen.

Damit liegt eine sehr stabile Anbindungsstelle für das Kugelgelenk 13 vor, das zusammen mit dem Abrollrohr über die Kolbenstange 19 auf den Schwingungsdämpfer geschoben wird, bis das Kugelgelenk 13 stirnseitig am äußeren Zylinder 39 anliegt. Auf das Befestigungsgewinde, das über das sphäroidische Lagerelement 15 hinausragend, wird abschließend die Befestigungsmutter 45 geschraubt.

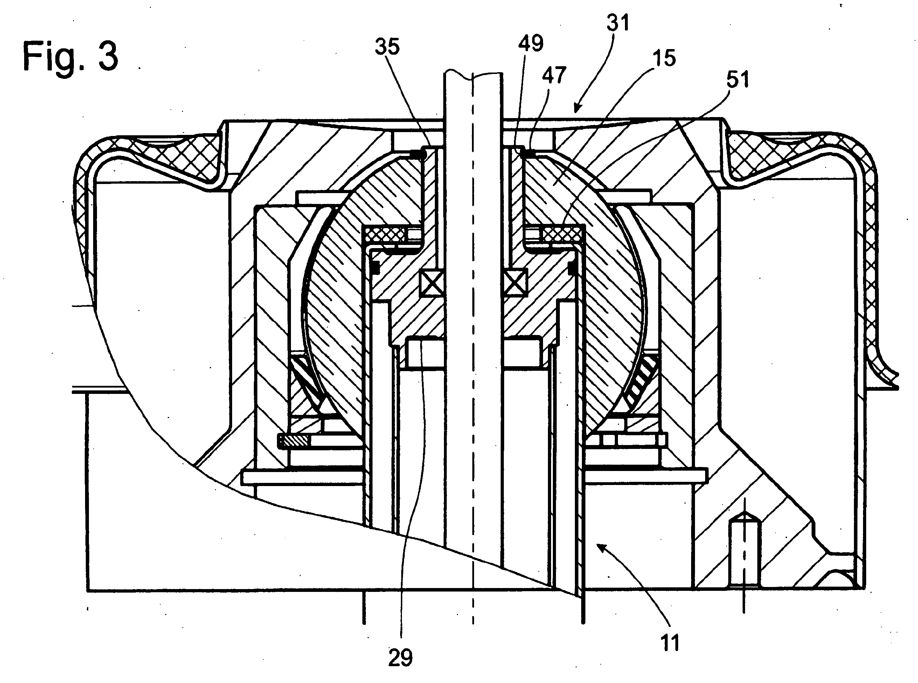

Die Fig. 3 zeigt eine Alternativlösung zur Fig. 2, wobei sich die Unterschiede auf die Befestigungsbuchse 31 beschränken, die einteilig mit der Kolbenstange 29 ausgeführt ist. Des Weiteren kommt anstatt einer Befestigungsmutter ein Sicherungsring 47 zur Abwendung, der in einer Nut 49 der Befestigungshülse 35 gekammert ist. Zum Spielausgleich zwischen dem Sicherungsring 47 und dem Kugelgelenk 13, insbesondere dem sphäroidischen Lagerelement 15 dient eine Federscheibe 51, die axial zwischen dem Absatz 43 des Lagerelements 15 und der oberen Stirnfläche des Schwingungsdämpfers 11 verspannt ist.

## Patentansprüche

1. Luftfederbein (1), umfassend eine Luftfeder mit einem Rollbalg (3) , der mit einem Ende in Wirkverbindung mit einer kardanischen Lagerung (13) steht, die ein Lagerelement (15) aufweist, das sich axial an einem Schwingungsdämpfer (11) abstützt, der eine axial bewegliche Kolbenstange (25) aufweist, die von einer Kolbenstangenführung (29) radial zum Zylinder (27; 39) des Schwingsdämpfers (11) positioniert wird,
**dadurch gekennzeichnet,**
**dass** die Kolbenstangenführung (29) eine Befestigungsbuchse (31) trägt, an der das Lagerelement (15) fixiert ist.

2. Luftfederbein nach Anspruch 1,
**dadurch gekennzeichnet,**
**dass** die Befestigungsbuchse (31) zwischen einer Stirnfläche der Kolbenstangenführung (29) und einem zumindest partiell umgeformten Rand (37) des Zylinders (39) fixiert ist.

3. Luftfederbein nach Anspruch 1,
**dadurch gekennzeichnet,**
**dass** die Befestigungsbuchse (31) einen Befestigungskragen (33) und eine Befestigungshülse (35) aufweist, wobei der Befestigungskragen (33) stimseitig auf der Kolbenstangenführung (29) anliegt.

4. Luftfederbein nach Anspruch 1,
**dadurch gekennzeichnet,**
**dass** die Kolbenstangenführung (29) und die Befestigungsbuchse (31) einteilig ausgeführt sind.

5. Luftfederbein nach Anspruch 1,
**dadurch gekennzeichnet,**
**dass** die kardanische Lagerung (13) einen sphäroidisches Lagerelement (15) aufweist, das sich stimseitig auf dem Zylinder (39) abstützt.

6. Luftfederbein nach Anspruch 5,
**dadurch gekennzeichnet,**
**dass** das sphäroidische Lagerelement (15) eine stufenförmige Durchgangsöffnung (41) für den Schwingungsdämpfer (11) aufweist, der axial an einem Absatz (43) der Durchgangsöffnung (41) zur Anlage kommt.

7. Luftfederbein nach Anspruch 3,
**dadurch gekennzeichnet,**
**dass** die Befestigungshülse (35) ein Befestigungsgewinde für eine Befestigungsmutter (45) aufweist, die die kardanische Lagerung (13) fixiert.

8. Luftfeder nach Anspruch 3,
**dadurch gekennzeichnet,**
**dass** die Befestigungshülse (35) mit einem Sicherungsring (47) zur Fixierung der kardanischen Lagerung (13) zusammenwirkt.

9. Luftfeder nach Anspruch 8,
**dadurch gekennzeichnet,**
**dass** der Sicherungsring (47) axial von einem Federelement (51) vorgespannt wird.

10. Luftfederbein nach Anspruch 9,
**dadurch gekennzeichnet,**
**dass** zwischen dem Absatz (43) der Durchgangsöffnung (41) und der Stirnfläche am Schwingungsdämpfer eine Federscheibe (51) angeordnet ist.

## Claims

1. Pneumatic spring strut (1), comprising a pneumatic spring with a concertina (3) which is operatively connected at one end to a cardanic mounting (13) which has a bearing element (15) which is supported axially on a vibration damper (11) which has an axially movable piston rod (25) which is positioned radially with respect to the cylinder (27;39) of the vibration damper (11) by means of a piston-rod guide (29), **characterized in that** the piston-rod guide (29) carries a fastening bush (31) to which the bearing element (15) is fixed.

2. Pneumatic spring strut according to Claim 1, **characterized in that** the fastening bush (31) is fixed between one end face of the piston-rod guide (29) and an at least partially shaped-round margin (37) of the cylinder (39).

3. Pneumatic spring strut according to Claim 1, **characterized in that** the fastening bush (31) has a fastening collar (33) and a fastening sleeve (35), the fastening collar (33) bearing on the end face against the piston-rod guide (29).

4. Pneumatic spring strut according to Claim 1, **characterized in that** the piston-rod guide (29) and the fastening bush (31) are formed in one piece.

5. Pneumatic spring strut according to Claim 1, **characterized in that** the cardanic mounting (13) has a spheroidal bearing element (15) which is supported on the end face against the cylinder (39).

6. Pneumatic spring strut according to Claim 5, **characterized in that** the spheroidal bearing element (15) has a step-shaped passage orifice (41) for the vibration damper (11) which comes to bear axially against a shoulder (43) of the passage orifice (41).

7. Pneumatic spring strut according to Claim 3, **characterized in that** the fastening sleeve (35) has a fastening thread for a fastening nut (45) which fixes the cardanic mounting (13).

8. Pneumatic spring strut according to Claim 3, **characterized in that** the fastening sleeve (35) cooperates with a securing ring (47) for fixing the cardanic mounting (13).

9. Pneumatic spring strut according to Claim 8, **characterized in that** the securing ring (47) is prestressed axially by a spring element (51).

10. Pneumatic spring strut according to Claim 9, **characterized in that** a spring washer (51) is arranged between the shoulder (43) of the passage orifice (41) and the end face on the vibration damper.

## Revendications

1. Jambe de force pneumatique (1) comprenant un ressort pneumatique avec un soufflet roulant (3) qui est en liaison fonctionnelle par une extrémité avec un support de palier à cardan (13) qui présente un élément de palier (15), qui s'appuie axialement sur un amortisseur de vibrations (11) qui présente une tige de piston (25) déplaçable axialement, qui est positionnée par une glissière de tige de piston (29) radialement par rapport au cylindre (27 ; 39) de l'amortisseur de vibrations (11),
**caractérisée en ce que**
la glissière de tige de piston (29) porte une douille de fixation (31) sur laquelle est fixé l'élément de palier (15).

2. Jambe de force pneumatique selon la revendication 1,
**caractérisée en ce que**
la douille de fixation (31) est fixée entre une face frontale de la glissière de tige de piston (29) et un bord (37) du cylindre (39) au moins partiellement déformé.

3. Jambe de force pneumatique selon la revendication 1,
**caractérisée en ce que**
la douille de fixation (31) présente un rebord de fixation (33) et un manchon de fixation (35), le rebord de fixation (33) s'appliquant du côté frontal sur la glissière de tige de piston (29).

4. Jambe de force pneumatique selon la revendication 1,
**caractérisée en ce que**
la glissière de tige de piston (29) et la douille de fixation (31) sont réalisées d'une seule pièce.

5. Jambe de force pneumatique selon la revendication 1,
**caractérisée en ce que**
le support de palier à cardan (13) présente un élément de palier sphéroïde (15), qui s'appuie du côté frontal sur le cylindre (39).

6. Jambe de force pneumatique selon la revendication 5,
**caractérisée en ce que**
l'élément de palier sphéroïde (15) présente une ouverture de passage en forme de gradin (41) pour l'amortisseur de vibrations (11), qui vient en appui contre un épaulement (43) de l'ouverture de passage (41).

7. Jambe de force pneumatique selon la revendication 3,
**caractérisée en ce que**
le manchon de fixation (35) présente un filetage de fixation pour un écrou de fixation (45), qui fixe le support de palier à cardan (13).

8. Jambe de force pneumatique selon la revendication 3,
**caractérisée en ce que**
le manchon de fixation (35) coopère avec une bague de fixation (47) pour la fixation du support de palier à cardan (13).

9. Jambe de force pneumatique selon la revendication 8,
**caractérisée en ce que**
la bague de fixation (47) est précontrainte axialement par un élément de ressort (51).

10. Jambe de force pneumatique selon la revendication 9,
**caractérisée en ce**
**qu'**une rondelle élastique (51) est disposée entre l'épaulement (43) de l'ouverture de passage (41) et la surface frontale sur l'amortisseur de vibrations.
